# EUROPEAN PATENT APPLICATION

(11) **EP 2 426 908 A1**
(43) Date of publication of application: **07.03.2012**
(21) Application number: 10788836.4
(22) Date of filing: 31.05.2010
(51) Int. Cl.: H04M 3/523, H04M 3/54

(54) **ENTERPRISE CALL CENTER SYSTEM, IMPLEMENTATION METHOD THEREOF AND MOBILE COMMUNICATION TERMINAL USED IN SYSTEM**

(30) Priority: 17.06.2009 CN 200910108358
(71) Applicant: ZTE Corporation, Shenzhen, Guangdong 518057 (CN)
(72) Inventor: YAN, Fei, Shenzhen City Guangdong Province 518057 (CN); LAI, Tianjian, Shenzhen City Guangdong Province 518057 (CN)
(74) Representative: Novagraaf Technologies
(86) International application number: PCT/CN2010/073393
(87) International publication number: WO 2010/145440

(57) **Abstract**

The invention discloses an enterprise call center system, an implementation method thereof and a mobile communication terminal used in the system. The enterprise call center system comprises an access platform, a database system module and a processor module, wherein, the processor module is used to receive request information proposed by a calling user sent by a mobile communication terminal registered in the enterprise call center system, search for matched content corresponding to the request information in the database system module, and inform the calling user of the matched content, a call request of the calling user being received by the access platform. By using the scheme provided by the invention, the number of operators can be greatly increased, and the mobility performance of mobile communication terminals are merged together, and product competitiveness of the mobile is enhanced.

## Description

### Technical Field

The present invention relates to communication field, and especially to an enterprise call center system for a switchboard access service, an implementation method thereof and a mobile communication terminal used in the system.

### Background of the Related Art

Switchboard access service means that some operational entities apply a switchboard access number, which can provide automatic extension transition and artificial service when a user accesses the number by dialing. By purchasing a switchboard product, an enterprise could save the cost for communication between enterprise users, and simultaneously improve the foreign image of the enterprise and better provide services for enterprise customers.

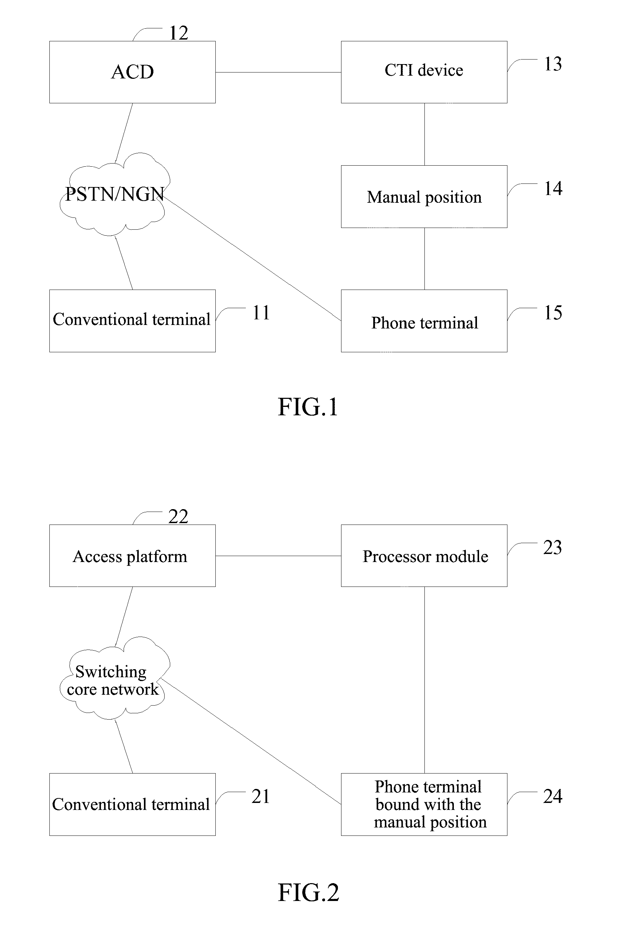

The structure diagram of a switchboard access system in the related art is shown in FIG.1. The switchboard access system includes a conventional terminal 11, public switched telephony network/next generation network (PSTN/NGN), an automatic call distributor (ACD) 12, a computer telephony/telecommunication integration (CTI) device 13, a manual position 14 and a phone terminal 15 bound with the manual position 14. The conventional terminal 11 makes a call into ACD 12 through PSTN/NGN access. ACD 12 transfers the call to CTI device 13, and CTI device 13 realizes a capability of skill routing and queuing by a skill queue and a manual position, and transfers the call to a corresponding manual position 14, which transfers a current speech path to other called numbers. The technique is applied widely in a call center system, and CTI device 13 realizes a capability of skill routing and queuing by skill queue and a manual position.

However, for many small and medium enterprises, the cost to build their own call center systems are relatively high, and thus they can not afford the kind of switchboard access system. Firstly, a switchboard access system is required to include some hardware investments, such as an automatic voice device, a client device, CTI, ACD and other devices, and corresponding software investments, so the building cost is very large. Secondly, the number of manual positions supported by such a set of switchboard center system at its full configuration is limited, and more specialized operators are needed when service volume increases, thus resulting in a high labor cost. Further, the manual positions in the call center system could be only located at a fixed location due to limitation of a geographic location, and specialized operators are needed to answer customers' calls, thus resulting in a high cost of enterprise management. Lastly, the call center system can not bind an arbitrary terminal as the position, thus resulting in a weak mobility of the position and increase in the maintenance cost of the enterprise.

### Summary of the Invention

In view of the above, the technical problem to be solved by the invention is that the enterprise call center system can not be used due to the high input cost of call center devices, high input cost of labor, weak mobility of positions and other factors. An enterprise call center system, an implementation method thereof and a mobile communication terminal used in the system is provided to solve the problem.

To solve the above technical problem, the technical scheme of the invention is realized as follows:

A system for an enterprise call center, comprising an access platform and a database system module, the system further comprises:
a processor module, which is used to receive request information proposed by a calling user sent by a mobile communication terminal registered in the enterprise call center system, search for matched content corresponding to the request information in the database system module, and inform the calling user of the matched content, a call request of the calling user being received by the access platform.

The processor module comprises a USSD service module, which is used to inform the calling user of the matched content by a USSD message when the calling user uses a GSM network, or send the matched content to the mobile communication terminal by way of the USSD message when the mobile communication terminal uses a GSM network, after which the mobile communication terminal informs the calling user of the matched content.

The mobile communication terminal comprises an encoding module, and the processor module comprises a decoding module, wherein, the encoding module is used to code the request information proposed by the calling user according to a predetermined coding scheme; the decoding module is used to decode the encoded request information.

The processor module comprises a registration and authentication module, which is used to accept a registration application sent by the mobile communication terminal, and authenticate when receiving the request information proposed by the calling user sent by the mobile communication terminal, and judge whether the mobile communication terminal has registered.

A method for implementation of an enterprise call center system, comprising:
an access platform connecting a call request from a calling user to a mobile communication terminal registered in the enterprise call center system;
sending request information proposed by the calling user to a processor module by the mobile communication terminal;
the processor module, according to the request information, searching for matched content corresponding to the request information and informing the calling user of the matched content.

Prior to the step of connecting the call request to the mobile communication terminal, the method further comprises:
①receiving the call request, which enters a call sequence queue;
②judging whether there exists a call standing in front of the call request, if yes, proceeding to ③, or else, proceeding to ④;
③continuing to queue to wait for a predetermined time, proceeding to ②;
④searching for the mobile communication terminal in idle condition.

When the call request is connected to the mobile communication terminal, the method further comprises: broadcasting an operation prompt tone to the calling user so that the user proposes request information according to the prompt tone.

The step of sending the request information proposed by the calling user to the processor module by the mobile communication terminal is specifically: the mobile communication terminal encoding the request information proposed by the calling user according to a predetermined coding scheme, and then sending to the processor module the coded request information;
prior to the step of the processor module searching for the matched content according to the request information, the method further comprises: decoding the coded request information.

The step of informing the calling user of the matched content comprises: the processor module informing the calling user of the matched content that has been searched out by way of a USSD message or a voice notification, or the processor module informing the mobile communication terminal of the matched content that has been searched out by way of a USSD message or a voice notification, and then the mobile communication terminal informing the calling user of the matched content.

A mobile communication terminal used in an enterprise call center system, comprising: an encoding module, which is used to encode request information proposed by a calling user according to a predetermined coding scheme, and then send an encoding result to the enterprise call center system.

Compared with the related art, use of the enterprise call center system, the implementation method thereof and the mobile communication terminal used in the system in the invention solves the problem in the related art that the call center system can not be used due to the input cost problem of devices of the call center and too high input cost of labor and other factors. In addition, as long as a terminal is a mobile communication terminal of an enterprise staff, it can be used to solve a call request from outside the enterprise, thus greatly increasing the number of operators, meanwhile, the mobile performance of mobile communication terminals are merged together, thus enhancing product competitiveness of the mobile, and increasing service benefits. The existing network resources and mobile communication terminal resources can be utilized as much as possible, with no need of additional hardware purchase, maintenance or labor cost input, configuration is flexible and practicality is enhanced.

### Brief Description of Drawings

FIG.1 is a structure diagram of a switchboard access system in the related art;
FIG.2 is a structure diagram of the enterprise call center system of the invention;
FIG.3 is a flowchart diagram of the implementation method for the enterprise call center system of the invention;
FIG.4 is a diagram of an embodiment of the implementation method for the enterprise call center system of the invention.

### Specific Embodiments

The enterprise call center system, the implementation method thereof and the mobile communication terminal used in the system of the invention will be described below with reference to accompanying drawings.

With reference to FIG.2, it is block diagram of the modules of the enterprise call center system of the invention.

The enterprise call center system of the invention includes a conventional terminal 21, an access platform 22, a processor module 23 and a phone terminal 24 bound with a manual position.

Wherein, the conventional terminal 21 is connected to the access platform 22 though a switching core network and starts a call to a called phone. The switching core network may be a PSTN, a PLMN (public land mobile-communication network), or a NGN, etc., and the conventional terminal 21 may be a fixed phone, a personal handphone system, a mobile phone, a SIP phone, etc. according to different accessing modes.

The access platform 22 is usually a call center platform, including a call access device (including ACD) and a CTI device. Wherein, the call access device is equivalent to an end office of a telecommunication network. A tandem exchange routes a call to a call access device according to the attribute of the called number. The call access device interacts with a CTI device, which includes IVR (interactive voice response) and VP (voice platform) and is responsible for speech, number receiving and so on. In the embodiment, a tandem exchange routes a call from the conventional terminal 21 to the call access device of the access platform 22, and the call access device notifies a CTI device in the access platform 22 to broadcast a prompt tone to the calling user after receiving the call, and send a call request to an application server according to the call.

The processor module 23 includes a registration and authentication module, a database system module, a decoding module, a searching module and an unstructured supplementary service data (USSD) service module. Among them, the registration and authentication module is used to accept a registration application from a phone terminal 24 bound with a manual position, and judge whether the phone terminal 24 bound with the manual position has registered when receiving request information proposed by the calling user sent by the phone terminal 24 bound with the manual position, and choose the request information sent by a phone terminal 24 which has passed the registration. The database system module is used to store phone numbers of an enterprise, and names, phone numbers, and other information of employees of the enterprise. Phone numbers of an enterprise include a switchboard number and extension numbers. The extension numbers may correspond to the telephone numbers of employees of the enterprise. The decoding module is used to decode the request information sent by a phone terminal 24 bound with a manual position, and then transmit it to the searching module. The searching module is used to search for matched content corresponding to the request information in the database system module. The USSD service module is used to inform a calling user of the matched content by way of a USSD massage when the calling user uses a GSM network, or is used to send the matched content by way of a USSD message to the phone terminal when the phone terminal 24 bound with a manual position uses a GSM network, and then the phone terminal informs the calling user of the matched content.

The phone terminal 24 bound with a manual position is a mobile communication terminal of an enterprise employee. The mobile communication terminal includes an encoding module. The mobile communication terminal receives a call request of the calling user transferred by the access platform 22, writes and sends to the processor module 23 the request information proposed by the calling user by the encoding module according to a predetermined coding scheme.

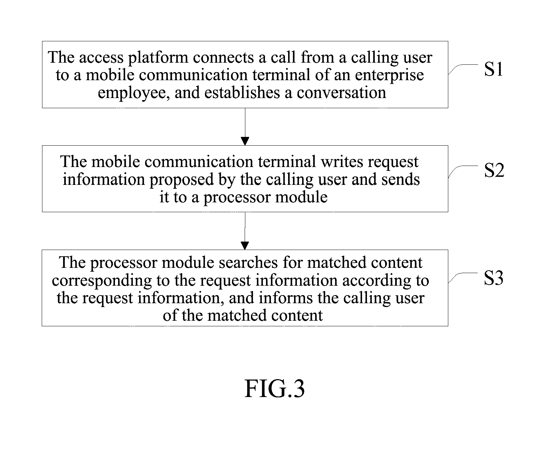

With reference to FIG.3, it is a flowchart diagram of the implementation method for an enterprise call center system of the invention.

The implementation method of the enterprise call center system of the invention includes the following steps:
S1, the access platform connecting a call from a calling user to a mobile communication terminal of an enterprise employee, and establishing a conversation, and the mobile communication terminal fulfilling registration in the enterprise call center system;
S2, the mobile communication terminal writing request information proposed by the calling user and sending it to a processor module;
S3, the processor module searching for matched content corresponding to the request information according to the request information, and informing the calling user of the matched content.

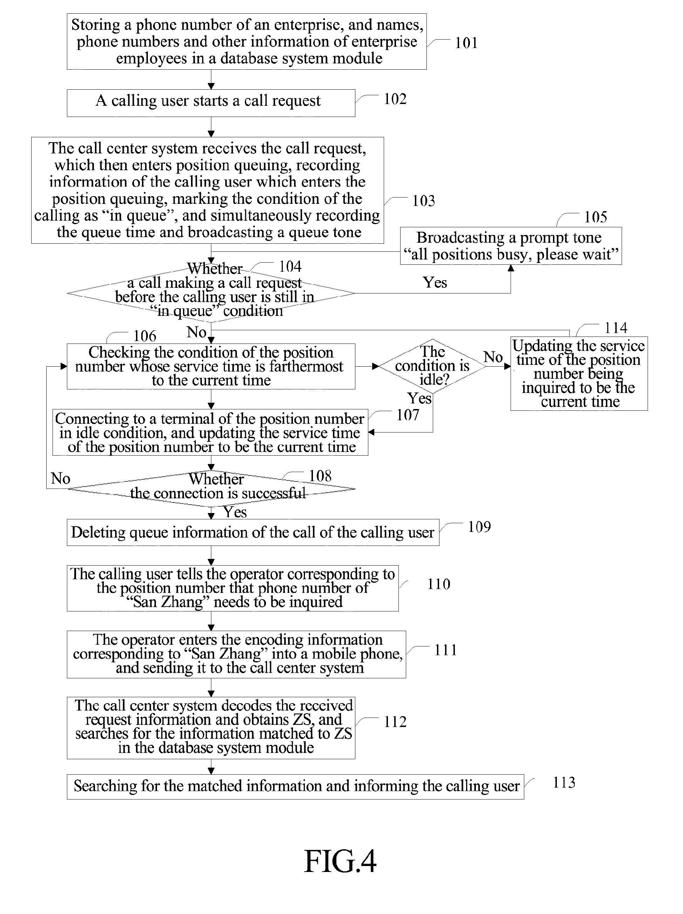

With reference to FIG.4, it is a diagram of an embodiment of the implementation method for an enterprise call center system of the invention.

The embodiment of the implementation method for the enterprise call center system of the invention, taking a calling user searching for a phone number of an enterprise employee "San Zhang" as an example, includes the following steps:
Step 101, information of a phone number of an enterprise, and names, phone numbers and other information of enterprise employees are stored in a database system module. Wherein, the phone number of an enterprise includes a switchboard number and extension numbers.
Step 102, a foreign terminal of the enterprise dials the phone number of the enterprise, i.e. a calling user starts a call request.
Step 103, the access platform of the enterprise call center system receives the call request, which then enters position queuing, records information of the calling user which enters the position queuing, such as the phone number, and marks with an incoming serial number of the current calling, for example, the 9^{th} calling user, and marks the condition of the calling as "in queue", and simultaneously records the queue time. In addition, queue tone, or billing tone is broadcast to the calling user during the queuing process.
Step 104, the access platform judges whether a call making a call request before the calling user is still "in queue" condition. If yes, proceed to step 105, otherwise, proceed to step 106. In step 104, judgment on whether to process the call request of the calling user is also realized by deciding whether there exists a queue time larger than that of the calling user, through comparing queue times of incoming calls in the "in queue" condition.
Step 105, the access platform broadcasts to the calling user a prompt tone "all positions busy, please wait", and continues to broadcast the queue tone till the time of the calling user in the "in queue" condition exceeds a predetermined fixed time, and then once again executes the step 104.
Step 106, the access platform checks whether the condition of the position number whose service time is farthermost to current time is in idle condition. If yes, proceed to step 107; otherwise, proceed to step 114. A service time corresponds to a position number. Update time is the time when being searched, and may be also the time when providing position service currently.
Step 107, the access platform connects the call of the calling user to a terminal corresponding to the position number in idle condition, and updates the service time of the position number to be current time. Connecting approach adopts a meeting approach of key receiving by the calling phone, so as to monitor operations such as number receiving during a conversation.
Step 108, the access platform judges whether the connection is successful, if yes, proceed to step 109, otherwise, proceed to step 106.
Step 109, the access platform deletes queue information, i.e. "in queue" condition, of the call of the calling user, and may broadcast to the calling user an operation prompt tone "if a customer needs query, please press 1; if a customer needs a transfer, please directly enter number and press # to end; if a customer needs to transfer to a voice mail of a certain person, please press 3; if a customer needs to switch to some other services, please press XXXX, among which "tick" is "confirmation tone".
Step 110, the calling user tells the operator corresponding to the position number that he needs to inquire the phone number of "San Zhang". The calling user tells the operator by way of key choice or conversation that the phone number of "San Zhang" needs to be inquired.
Step 111, the operator enters the encoding information corresponding to "San Zhang" to a terminal, and sends the request information to the processor module of the call center system. Specifically, the operator key inputs the encoding information corresponding to "San Zhang" to a terminal according to a predetermined coding scheme, which may be initial characters of pinyin, for example, pressing digital key 9 twice indicates input of a character Z, and pressing digital key 7 twice indicates input of a character S, and pressing key * for confirmation after the input is completed. Or, ASCii encoding may be also used to complete character encoding, for example, ASCII encoding of character "a" is 97.
Step 112, the decoding module in the processor module of the call center system decodes the received request information and obtains ZS, and searches for the information matched to ZS in the database system block. The decoding module in the call center system decodes the received information, and according to the decoded information obtained after the decoding, the searching module searches for the information matched to the decoded information in the database system module. The search result may be a plurality of pieces of returned results. The registration and authentication module in the processor module may also judge whether the terminal 24 has registered when receiving the request information sent from the terminal, and if so, it sends the request information to the decoding module.
Step 113, the searching module searches for matched information, and downlinks to the terminal of the operator by way of a USSD message of a USSD service module or a voice notification, and then the operator informs the calling user, or downlinks directly to the calling user with a USSD message or a voice notification.

In step 113, if there are a plurality of pieces of matched information that have gbeen searched out, and the information needed by the calling user is one of them, the call center system judges which network type a terminal of an operator belongs to. If it is a GSM network, then a USSD service module is activated, and the USSD service module sends to the terminal of the operator the matched information that has been searched out and the number thereof by way of a USSD message, such as telephone/fixed phone, and waits for related content fed back by the operator. If it is not a GSM network (such as fixed phone network or CDMA network, i.e.) phone terminal, searching result information is broadcast by way of a voice prompt. The operator selects information needed by the calling user by a conversation exchange with the calling user, and sends to the USSD service module the number of the information needed by the calling user. Then, the call center system uses a USSD message or a voice notification to downlink to the terminal of the operator, which then informs the calling user, or uses a USSD message or a voice notification to directly downlink to the calling user.

Step 114, the service time of the position number being inquired is updated to be the current time, and proceeds to step 106.

In addition, in step 106 of the above method, if all the position numbers have been inquired once by sequence, but there is still no position number in idle condition, then the prompt tone "no position online, please hang up" is broadcast to the calling user, the user queue information of the call is deleted, and the call is released.

In addition, if the request started by the calling user is "phone transfer to San Zhang", the above method will be differ in that the step 113 further includes: transferring the call from the calling user to the phone of "San Zhang".

Compared with the related art, use of the enterprise call center system, the implementation method thereof and the mobile communication terminal used in the system in the invention solves the problem in the related art that the call center system can not be used due to the input cost problem of devices of the call center and too high input cost of labor and other factors. In addition, as long as a terminal is a mobile communication terminal of an enterprise staff, it can be used to solve a call request from outside the enterprise, thus greatly increasing the number of operators, meanwhile, the mobile performance of mobile communication terminals are merged together, thus enhancing product competitiveness of the mobile, and increasing service benefits. The existing network resources and mobile communication terminal resources can be utilized as much as possible, with no need of additional hardware purchase, maintenance or labor cost input, configuration is flexible and practicality is enhanced.

The above embodiments are only preferred embodiments of the invention, and they are not intended to limit the invention. For those skilled in the art, the invention may have various modifications and variations. Any modification, equivalent substitution, improvement and so on without departing from the spirit and the principle of the invention, should be included in the protection scope of the invention.

## Claims

1. An enterprise call center system, comprising an access platform and a database system module, **characterized in that** the system further comprises:
a processor module, which is to receive request information proposed by a calling user sent by a mobile communication terminal registering in the enterprise call center system, search for matched content corresponding to the request information in the database system module, and inform the calling user of the matched content, a call request of the calling user being received by the access platform.

2. The system according to claim 1, wherein, the processor module comprises:
a USSD service module, which is to inform the calling user of the matched content by way of a USSD message when the calling user uses a GSM network, or send the matched content to the mobile communication terminal by way of the USSD message when the mobile communication terminal uses a GSM network, and then the mobile communication terminal informs the calling user.

3. The system according to claim 1, wherein, the mobile communication terminal comprises an encoding module, and the processor module comprises a decoding module, wherein,
the encoding module is to encode the request information proposed by the calling user according to a predetermined coding scheme;
the decoding module is to decode the encoded request information.

4. The system according to any one of claims 1-3, wherein, the processor module comprises:
a registration and authentication module, which is to accept a registration application sent by the mobile communication terminal, and carry out authentication when receiving the request information proposed by the calling user sent by the mobile communication terminal, and judge whether the mobile communication terminal has registered.

5. A method for implementing an enterprise call center system, **characterized in that** the method comprises:
an access platform connecting a call request from a calling user to a mobile communication terminal registering in the enterprise call center system;
sending request information proposed by the calling user to a processor module by the mobile communication terminal;
the processor module, according to the request information, searching for matched content corresponding to the request information and informing the calling user of the matched content.

6. The method according to claim 5, wherein, prior to the step of connecting the call request to the mobile communication terminal, the method further comprises:
①receiving the call request, which enters a call sequence queue;
②judging whether there exists a call standing in front of the call request, if yes, proceeding to ③, or else, proceeding to ④;
③continuing to queue to wait for a predetermined time, proceeding to ②;
④searching for the mobile communication terminal in idle condition.

7. The method according to claim 6, wherein, when the call request is connected to the mobile communication terminal, the method further comprises: broadcasting an operation prompt tone to the calling user so that the user proposes request information according to the prompt tone.

8. The method according to claim 5, wherein,
the step of sending the request information proposed by the calling user to the processor module by the mobile communication terminal is specifically: the mobile communication terminal encoding the request information proposed by the calling user according to a predetermined coding scheme, and then sending the encoded request information to the processor module;
prior to the step of the processor module searching for the matched content according to the request information, the method further comprises: decoding the encoded request information.

9. The method according to any one of claims 5-8, wherein, the step of informing the calling user of the matched content comprises:
the processor module informing the calling user of the matched content that has been searched out by way of a USSD message or a voice notification, or the processor module informing the mobile communication terminal of the matched content that has been searched out by way of the USSD message or the voice notification, and then the mobile communication terminal informing the calling user.

10. A mobile communication terminal used in an enterprise call center system, comprising:
an encoding module, which is to encode request information proposed by a calling user according to a predetermined coding scheme, and then send an encoding result to the enterprise call center system.
